(19) Europäisches Patentamt
European Patent Office
Office européen des brevets

(11) **EP 2 291 385 B1**

(12) **EUROPÄISCHE PATENTSCHRIFT**

(45) Veröffentlichungstag und Bekanntmachung des Hinweises auf die Patenterteilung:
**24.09.2014 Patentblatt 2014/39**

(21) Anmeldenummer: **09757352.1**

(22) Anmeldetag: **09.04.2009**

(51) Int Cl.:
***C07F 7/20*** (2006.01)

(86) Internationale Anmeldenummer:
**PCT/EP2009/054282**

(87) Internationale Veröffentlichungsnummer:
**WO 2009/146969 (10.12.2009 Gazette 2009/50)**

(54) **VERFAHREN ZUR WÄSSRIGEN AUFARBEITUNG EINES AMMONIUMHALOGENIDE UND/ODER ORGANISCHE AMINHYDROHALOGENIDE ENTHALTENDEN AMINOFUNKTIONELLEN ORGANOSILANS**

METHOD FOR THE AQUEOUS TREATMENT OF AN AMINO-FUNCTIONAL ORGANOSILANE CONTAINING AMMONIUM HALIDES AND/OR ORGANIC AMINE HYDROHALIDES

PROCÉDÉ DE TRAITEMENT EN PHASE AQUEUSE D'UN ORGANOSILANE À FONCTION AMINO CONTENANT DES HALOGÉNURES D'AMMONIUM ET/OU DES AMINHYDROHALOGÉNURES ORGANIQUES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **03.06.2008 DE 102008002181**

(43) Veröffentlichungstag der Anmeldung:
**09.03.2011 Patentblatt 2011/10**

(73) Patentinhaber: **Evonik Degussa GmbH**
**45128 Essen (DE)**

(72) Erfinder:
• **ALBERT, Philipp**
**79539 Lörrach (DE)**
• **JUST, Eckhard**
**79618 Rheinfelden (DE)**

(56) Entgegenhaltungen:
**DE-A1- 4 130 643    DE-A1- 10 140 563**

**Beschreibung**

Die vorliegende Erfindung betrifft ein neues Verfahren für eine wässrige Aufarbeitung eines Ammoniumhalogenide und/oder organische Aminhydrohalogenide enthaltenden aminofunktionellen Organosilans, wie man es beispielsweise bei der Herstellung eines aminofunktionellen Organosilans durch Umsetzung eines halogenfunktionellen Organosilans mit überschüssigem Ammoniak oder einem organischen Amin erhält.

Aminosilane haben ein vielfältiges Anwendungsspektrum. Sie werden beispielsweise für Glasfaserschlichten verwendet oder in der Gießereiindustrie als Verarbeitungshilfsstoffe eingesetzt, ebenfalls dienen sie als Haftvermittler für lagerungsstabile Harze.

Es ist lange bekannt, aminofunktionelle Organosilane insbesondere aus chlorfunktionellen Organosilanen und Ammoniak oder organischen Aminen herzustellen, dabei sind das gebildete Ammoniumchlorid oder das gebildete organische Aminhydrochlorid abzutrennen (DE-PS 10 23 462, DE-PS 27 49 316, DE-PS 27 53 124, EP 0 702 017 A2, EP 0 741 137 A2, EP 0 849 271 A2, EP 1 295 889 A2).

In EP 1 262 484 A2, EP 1 209 162 A2 und DE 101 40 563 A1 wird derart verfahren, dass man das Herstellverfahren über verschiedene Druckstufen ablaufen lässt, wodurch u. a. die Folgen aus der Problematik von Salzanbackungen gemindert werden konnten.

Den Verfahren zur Herstellung von aminofunktionellen Organosilanen durch Umsetzung entsprechender halogenorganofunktioneller Silane mit Ammoniak oder einem Amin ist gemeinsam, dass dabei anfallende salzartige Verbindungen, insbesondere Ammoniumhalogenide und/oder organische Aminhydrochloride nur unter großem Aufwand vom gewünschten Produkt möglichst vollständig zu trennen sind und die Produkte dennoch einen unerwünschten Halogenidgehalt aufweisen. Darüber hinaus ist man bemüht, auch im Anschluss an das Herstellverfahren den Restgehalt an Halogenid im aminofunktionellen Organosilan durch zusätzliche, aufwändige Nachbehandlungen nochmals zu mindern, beispielsweise durch Titration des Produkts mit einer alkoholischen Alkalialkoholatlösung, EP 0 702 017.

Der vorliegenden Erfindung lag daher die Aufgabe zugrunde, eine weitere Möglichkeit zur Aufarbeitung von Ammoniumhalogenide und/oder organische Aminhydrohalogenide enthaltenden aminofunktionellen Organosilanen bereitzustellen.

Die gestellte Aufgabe wird erfindungsgemäß entsprechend den Angaben der Patentansprüche gelöst.

Überraschenderweise wurde gefunden, dass man Ammoniumhalogenide und/oder organische Aminhydrohalogenide, insbesondere Hydrochloride, aus Aminosilanen unter Zusatz einer stark alkalischen, wässrigen Lösung entfernen kann, ohne dabei das Aminoalkoxysilan zu hydrolysieren.

Darüber hinaus kann man durch dieses vergleichsweise einfache Verfahren Halogenidgehalte im Produkt von weniger als 100 Gew.-ppm erreichen.

Das vorliegende Verfahren ist allgemein auf alle aminofunktionellen Organosilane vorteilhaft anwendbar. Insbesondere konnte dadurch eine vergleichsweise einfache und gleichzeitig wirtschaftliche wässrige Aufarbeitung von Rohprodukt aus einer Aminosilansynthese vorteilhaft ermöglicht werden.

So wurde in überraschender Weise gefunden, dass man ein Ammoniumhalogenide und/oder organische Aminhydrohalogenide enthaltendes aminofunktionelles Organosilan, wobei dessen Herstellung auf der Umsetzung eines halogenfunktionellen Organoalkoxysilans mit überschüssigem Ammoniak oder organischem Amin, vorzugsweise unter Druck sowie in flüssiger Phase, und anschließender Trennung sowie Aufarbeitung von Rohprodukt und anfallendem Salz basiert, in einfacher und wirtschaftlicher Weise aufarbeiten kann, indem man dem Ammoniumhalogenide und/oder organische Aminhydrohalogenide enthaltenden aminofunktionellen Organosilan (hier und nachfolgend Rohprodukt oder Produktgemisch genannt)

- optional mindestens ein unpolares organisches Lösemittel zusetzt,
- eine wässrige Lauge zugibt,
- reagieren lässt, bevorzugt unter definierter Zeitvorgabe,
- anschließend die wässrige von der organischen Phase trennt,
- aus der organischen Phase das/die vorliegenden Lösemittel entfernt und
- die verbliebene organische Phase gewinnt.

Darüber hinaus weist ein solches nach dem erfindungsgemäßen Verfahren erhaltenes amniofunktionelles Organosilan vorteilhaft einen Gehalt an hydrolysierbarem Chlorid von weniger als 100 Gew.-ppm bis hin zur Nachweisgrenze von 6 Gew.-ppm auf. Beispiele für hydrolysierbares Chlorid sind u. a. organische Aminhydrochloride, Ammoniumchloride, Chlorsilane usw. Die Bestimmung von hydrolysierbarem Chlorid kann beispielsweise potentiografisch mit Silbernitrat erfolgen.

Erfindungsgemäß kann man insbesondere aminofunktionelle Organosilane der allgemeine Formel (I), aber auch solche der allgemeinen Formel (II) und/oder (III), oder deren jeweilige Rohprodukte bzw. entsprechende Produktgemische von Organosilanen der Formeln (I), (II) und/oder (III), wie sie bei u. a. bei der Herstellung anfallen können, aufarbeiten:

Unverbrückte aminofunktionelle Organosilane, d. h. monosilylierte Amine, können durch die allgemeine Formel (I) veranschaulicht werden

$$R_2N[(CH_2)_2NH]_z(Z)Si(R'')_n(OR')_{3-n} \qquad (I),$$

worin Gruppen R gleich oder verschieden sind und R für Wasserstoff (H) oder eine lineare oder verzweigte Alkyl-Gruppe mit 1 bis 4 C-Atomen steht, bevorzugt H oder n-Butyl, Gruppen R' gleich oder verschieden sind und R' für Wasserstoff (H) oder eine lineare oder verzweigte Alkyl-Gruppe mit 1 bis 8 C-Atomen oder eine Aryl-Gruppe steht, bevorzugt Methyl oder Ethyl, Gruppen R'' gleich oder verschieden sind und R'' eine lineare oder verzweigte Alkyl-Gruppe mit 1 bis 8 C-Atomen, wie Methyl, Ethyl, Propyl, Butyl, vorzugsweise Methyl, oder eine Aryl-Gruppe darstellt, Z für eine bivalente Alkylgruppe aus der Reihe $-CH_2-$, $-(CH_2)_2-$, $-(CH_2)_3-$, $-(CH_2)_4-$ oder $-(CH_2)(CH)CH_3(CH_2)-$ steht, bevorzugt Propyl, n gleich 0, 1, 2 oder 3 ist, vorzugsweise 0, und z gleich 0, 1 oder 2 ist,

Bis-aminofunktionelle Organosilane, d. h. bis-silylierte Amine, durch die allgemeine Formel (II):

$$(R'O)_{3-n}(R'')_nSi(Z)[NH(CH_2)_2]_yNR[(CH_2)_2NH]_z(Z)Si(R'')_n(OR')_{3-n} \qquad (II),$$

worin R für ein Wasserstoff (H) oder eine lineare oder verzweigte Alkyl-Gruppe mit 1 bis 4 C-Atomen steht, bevorzugt H oder n-Butyl, Gruppen R' gleich oder verschieden sind und R' für Wasserstoff (H) oder eine lineare oder verzweigte Alkyl-Gruppe mit 1 bis 8 C-Atomen oder eine Aryl-Gruppe steht, bevorzugt Methyl oder Ethyl, Gruppen R'' gleich oder verschieden sind und R'' eine lineare oder verzweigte Alkyl-Gruppe mit 1 bis 8 C-Atomen, wie Methyl, Ethyl, Propyl, Butyl, vorzugsweise Methyl, oder eine Aryl-Gruppe darstellt, Gruppen Z gleich oder verschieden sind und Z für eine bivalente Alkyl-Gruppe aus der Reihe $-CH_2-$, $-(CH_2)_2-$, $-(CH_2)_3-$, $-(CH_2)_4-$ oder $-(CH_2)(CH)CH_3(CH_2)-$ steht, bevorzugt Propyl, n unabhängig gleich 0, 1, 2 oder 3 ist, vorzugsweise 0, und y sowie z unabhängig gleich 0, 1 oder 2 sind, vorzugsweise

$$(H_3CO)_3Si(CH_2)_3NH(CH_2)_3Si(OCH_3)_3 \qquad (Bis-AMMO),$$
$$(H_5C_2O)_3Si(CH_2)_3NH(CH_2)_3Si(OC_2H_5)_3 \qquad (Bis-AMEO),$$

und
Tris-aminofunktionelle Organosilane, d. h. tris-silylierte Amine, durch die allgemeine Formel (III):

$$[(R'O)_{3-n}(R'')_nSi(Z)[NH(CH_2)_2]_x]_3N \qquad (III),$$

worin Gruppen R' gleich oder verschieden sind und R' für ein Wasserstoff (H) oder eine lineare oder verzweigte Alkyl-Gruppe mit 1 bis 8 C-Atomen oder eine Aryl-Gruppe steht, bevorzugt Methyl oder Ethyl, Gruppen R'' gleich oder verschieden sind und R'' eine lineare oder verzweigte Alkyl-Gruppe mit 1 bis 4 C-Atomen, wie Methyl, Ethyl, Propyl, Butyl, vorzugsweise Methyl, oder eine Aryl-Gruppe darstellt, Gruppen Z gleich oder verschieden sind und Z für eine bivalente Alkylgruppe aus der Reihe $-CH_2-$, $-(CH_2)_2-$, $-(CH_2)_3-$, $-(CH_2)_4-$ oder $-(CH_2)(CH)CH_3(CH_2)-$ steht, bevorzugt Propyl, n unabhängig gleich 0, 1, 2 oder 3 ist, vorzugsweise 0, und x unabhängig gleich 0, 1 oder 2 ist, vorzugsweise

$$[(H_3CO)_3Si(CH_2)_3]_3N \qquad (Tris-AMMO),$$
$$[(H_5C_2O)_3Si(CH_2)_3]_3N \qquad (Tris-AMEO).$$

Gegenstand der vorliegenden Erfindung ist somit ein Verfahren zur Aufarbeitung eines Ammoniumhalogenide und/oder organische Aminhydrohalogenide enthaltenden aminofunktionellen Organosilans [auch kurz "wässrige Aufarbeitung" genannt],
wobei man dem Ammoniumhalogenide und/oder organische Aminhydrohalogenide enthaltenden aminofunktionellen Organosilan

- optional mindestens ein unpolares organisches Lösemittel zusetzt,
- eine wässrige Lauge zugibt,
- reagieren lässt,

- anschließend die wässrige von der organischen Phase trennt,
- aus der organischen Phase gegebenenfalls vorliegendes Lösemittel entfernt und
- die verbliebene organische Phase gewinnt.

Bei einer bevorzugte Ausführungsform des erfindungsgemäße Verfahren verfährt man vorteilhaft, indem man zunächst

- ein halogenfunktionelles Organosilan der allgemeinen Formel (IV)

$$X\text{-}Z\text{-}Si(R'')_n(OR')_{3-n} \qquad (IV),$$

worin X für Cl, Br oder J steht, Z eine bivalente Alkylgruppe aus der Reihe $-CH_2-$, $-(CH_2)_2-$, $-(CH_2)_3-$, $-(CH_2)_4-$ oder $-(CH_2)(CH)CH_3(CH_2)-$ darstellt, bevorzugt Propyl, Gruppen R' gleich oder verschieden sind und R' für ein Wasserstoff (H) oder eine lineare oder verzweigte Alkyl-Gruppe mit 1 bis 8 C-Atomen oder eine Aryl-Gruppe steht, bevorzugt Methyl oder Ethyl, Gruppen R'' gleich oder verschieden sind und R'' für eine lineare oder verzweigte Alkyl-Gruppe mit 1 bis 8 C-Atomen, wie Methyl, Ethyl, Propyl, Butyl, vorzugsweise Methyl, oder eine Aryl-Gruppe steht, und n gleich 0, 1, 2 oder 3 ist, vorzugsweise 0,
mit überschüssigem Ammoniak oder einem organischen Amin der allgemeinen Formel (V)

$$RNH[(CH_2)_2NH]_zR \qquad (V),$$

worin Gruppen R gleich oder verschieden sind und R für Wasserstoff (H) oder eine lineare oder verzweigte Alkyl-Gruppe mit 1 bis 4 C-Atomen steht, bevorzugt H oder n-Butyl und z gleich 0, 1 oder 2 ist,
umsetzt,

- aus dem so erhaltenen Gemisch an Reaktionsprodukten den überschüssigen Ammoniak bzw. nicht umgesetztes organisches Amin sowie gegebenenfalls angefallenes, festes Salz abtrennt, wobei man an dieser Stelle des Verfahrens optimal ein unpolares organisches Lösemittel zusetzen kann, vorzugsweise Toluol, und anschließend
- so erhaltenes Ammoniumhalogenide und/oder Aminhydrohalogenide enthaltendes Produktgemisch wässrig aufarbeitet, wobei man
- dem Produktgemisch optional mindestens ein unpolares organisches Lösemittel zusetzt,
- eine wässrige Lauge zugibt,
- reagieren lässt,
- die wässrige von der organischen Phase trennt,
- gegebenenfalls aus der organischen Phase Lösemittel entfernt und
- aus der verbliebenen organischen Phase mindestens ein aminofunktionelles Organosilan gemäß Formel (I)

$$R_2N[(CH_2)_2NH]_z(Z)Si(R'')_n(OR')_{3-n} \qquad (I),$$

worin Gruppen R gleich oder verschieden sind und R für Wasserstoff (H) oder eine lineare oder verzweigte Alkyl-Gruppe mit 1 bis 4 C-Atomen steht, bevorzugt H oder n-Butyl, Gruppen R' gleich oder verschieden sind und R' für Wasserstoff (H) oder eine lineare oder verzweigte Alkyl-Gruppe mit 1 bis 8 C-Atomen oder eine Aryl-Gruppe steht, bevorzugt Methyl oder Ethyl, Gruppen R'' gleich oder verschieden sind und R'' eine lineare oder verzweigte Alkyl-Gruppe mit 1 bis 8 C-Atomen, wie Methyl, Ethyl, Propyl, Butyl, vorzugsweise Methyl, oder eine Aryl-Gruppe darstellt, Z für eine bivalente Alkylgruppe aus der Reihe $-CH_2-$, $-(CH_2)_2-$, $-(CH_2)_3-$, $-(CH_2)_4-$ oder $-(CH_2)(CH)CH_3(CH_2)-$ steht, bevorzugt Propyl, n gleich 0, 1, 2 oder 3 ist, vorzugsweise 0, und z gleich 0, 1 oder 2 ist,

gewinnt. Darüber hinaus können ebenfalls Verbindungen der allgemeinen Formeln (II) und/ oder (III) gewonnen werden.
Insbesondere ist das Rohprodukt bzw. Produktgemisch erhältlich, wenn man

- A) ein halogenfunktionelles Organosilan der allgemeinen Formel (IV)

$$X\text{-}Z\text{-}Si(R'')_n(OR')_{3-n} \qquad (IV),$$

worin X für Cl, Br oder J steht, Z eine bivalente Alkylgruppe aus der Reihe $-CH_2-$, $-(CH_2)_2-$, $-(CH_2)_3-$, $-(CH_2)_4-$ oder

-$(CH_2)(CH)CH_3(CH_2)$- darstellt, Gruppen R' gleich oder verschieden sind und R' für ein Wasserstoff (H) oder eine lineare oder verzweigte Alkyl-Gruppe mit 1 bis 8 C-Atomen oder eine Aryl-Gruppe steht, Gruppen R" gleich oder verschieden sind und R" für eine lineare oder verzweigte Alkyl-Gruppe mit 1 bis 8 C-Atomen oder eine Aryl-Gruppe steht, und n gleich 0, 1, 2 oder 3 ist,

mit überschüssigem Ammoniak oder einem organischen Amin der allgemeinen Formel (V)

$$RNH[(CH_2)_2NH]_zR \qquad (V),$$

worin Gruppen R gleich oder verschieden sind und R für Wasserstoff (H) oder eine lineare oder verzweigte Alkyl-Gruppe mit 1 bis 4 C-Atomen steht, bevorzugt H oder n-Butyl und z gleich 0, 1 oder 2 ist,
unter Druck, d. h. unter Normaldruck (Umgebungsdruck) oder unter einem erhöhten Druck, und Temperaturerhöhung, vorzugsweise bei 1 bis 120 bar und 10 bis 140 °C, in flüssiger Phase umsetzt,

- B) anschließend überschüssiges Ammoniak oder organisches Amin abtrennt, vorzugsweise destilliert oder eine Phasentrennung von fester bzw. anorganischer und organischer Phase durchführt, und dabei jeweils Ammoniumhalogenid oder organisches Aminhydrohalogenid vollständig in der flüssigen Phase gelöst bleibt,

- C) die so erhaltene Flüssigphase in einen Kristallisator überführt, wobei man optional mindestens ein unpolares organisches Lösemittel zusetzen kann, vorzugsweise Toluol, und den Kristallisator auf einer niedrigeren Druckstufe als die vorhergehende Reaktionsstufe oder bei Umgebungsdruck betreibt, Ammoniumhalogenid bzw. organisches Aminhydrohalogenid und Rohprodukt trennt.
Anschließend kann man vorteilhaft in einem weiteren Schritt

- D) dem so erhaltenen Rohprodukt bzw. Produktgemisch, optional mindestens ein unpolares organisches Lösemittel, vorzugsweise Toluol, zusetzen, eine wässrige Lauge zugeben, reagieren lassen, anschließend die wässrige von der organischen Phase trennen, aus der organischen Phase gegebenenfalls vorliegendes Lösemittel entfernen, vorzugsweise durch Destillation, und

- E) die im Sumpf verbleibende organische Phase filtrieren und/oder durch eine fraktioniert Destillation mindestens ein aminofunktionelles Organosilan gemäß Formel (I) gewinnen, daneben kann man in einfacher und wirtschaftlicher Weise zusätzlich Bis- und Tris-Aminosilane gemäß den Formeln (II) und/oder (III) gewinnen, welche in der Regel als Nebenprodukte der Aminosilansynthese anfallen.

Gemäß Formel (I) handelt es sich bevorzugt um Verbindungen aus der Reihe 1-Aminomethyltrimethoxysilan, 1-Aminomethyltriethoxysilan, 1-Aminomethyl-methyldimethoxysilan, 1-Aminomethyl-methyldiethoxysilan, 2-Aminoethyltrimethoxy-silan, 2-Aminoethyltriethoxysilan, 3-Aminopropyltrimethoxysilan (AMMO), 3-Aminopropyltriethoxysilan (AMEO), 3-Aminopropylmethyldimethoxysilan, 3-Aminopropylmethyldiethoxysilan, N-Methyl-3-aminopropyltrimethoxy-silan, N-Methyl-3-aminopropyltriethoxysilan, N-Butyl-3-aminopropyltrimethoxysilan, 3-Aminopropyldimethylmethoxysilan, 3-Aminopropyl-dimethylethoxysilan, 3-Aminopropyltrimethylsilan, 3-Amino-2-methylpropyl-trimethoxysilan, 3-Amino-2-methylpropyltriethoxysilan, N-[2-Amino-ethyl]-3-aminopropyltrimethoxysilan (DAMO), N-[2-Aminoethyl]-3-aminopropyltriethoxysilan, N-[2-Aminoethyl]-3-aminopropyl-methyldimethoxysilan, N-[2-Aminoethyl]-3-aminopropylmethyldiethoxysilan, N,N-Bis[2-Aminoethyl]-3-aminopropyltrimethoxy-silan, N,N-Bis[2-Aminoethyl]-3-aminopropyltriethoxysilan, N-[2-Aminoethyl]-N'-[2-Aminoethyl]-3-aminopropyl-trimethoxysilan, N-[2-Aminoethyl]-N'-[2-Aminoethyl]-3-aminopropyltriethoxysilan, um nur einige Beispiele zu nennen.

Als halogenfunktionelles Organoalkoxysilan der allgemeinen Formel (IV) kann man vorzugsweise, aber nicht ausschließlich, 3-Chlorpropyltrimethoxysilan, 3-Chlorpropyltriethoxysilan, 3-Chlorpropylmethyldimethoxysilan oder 3-Chlorpropyl-methyldiethoxysilan ein. Man kann aber auch andere Chloralkylalkoxysilane, beispielsweise 3-Chlorpropyldiethylmethoxysilan oder 3-Chlorpropylmethylpropylethoxysilan verwenden.

Weiter kann man bei der Herstellung von organoaminoalkylfunktionellen Alkoxysilanen der allgemeinen Formel (I) an Stelle des bereits erwähnten Ammoniaks ein organisches Amin der allgemeinen Formel (V) beispielsweise, aber nicht ausschließlich, Methylamin, Dimethylamin, Ethylamin, Diethylamin oder Propylamin einsetzen.

In besagten Herstellungsverfahren für aminofunktionelle Organosilane bilden sich in der Regel Rückstände, d. h. Hydrohalogenide bzw. Halogensalze, insbesondere Hydrochloride bzw. Chloride. Der Vorgang kann beispielhaft durch die folgenden Gleichungen erläutert werden:

$$Cl(CH_2)_3Si(OMe)_3 + 2\ NH_3 = H_2N(CH_2)_3Si(OMe)_3 + [NH_4]^+Cl^-$$

$$3\ Cl(CH_2)_3Si(OMe)_3 + 4\ NH_3 = H_2N(CH_2)_3Si(OMe)_3 + [H_2N[(CH_2)_3Si(OMe)_3]_2]^+Cl^- + 2\ [NH_4]^+Cl^-$$

$$4\ Cl(CH_2)_3Si(OMe)_3 + 5\ NH_3 = H_2N(CH_2)_3Si(OMe)_3 + [HN[(CH_2)_3Si(OMe)_3]_3]^+Cl^- + 3\ [NH_4]^+Cl^-$$

Der Rückstand aus der Salzabtrennung des Aminosilanherstellverfahrens kann fest oder flüssig vorliegen und fällt bevorzugt in einer Kristallisationseinheit an.

Das erfindungsgemäß aufzuarbeitende Ammoniumhalogenide und/ oder Aminhydrohalogenide enthaltende aminofunktionelle Organosilan, insbesondere ein entsprechendes Rohprodukt bzw. Produktgemisch, kann unter guter Durchmischung vorteilhaft zunächst, d. h. optional mit einem im Wesentlichen unpolaren organischen Lösemittel, vorzugsweise ausgewählt aus der Reihe Hexan, Heptan, Octan, Cyclohexan, insbesondere Toluol, und/oder weiteren unpolaren Lösungsmitteln versetzt werden.

Anschließend wird das Gemisch mit einer wässrigen Lauge, vorzugsweise einer starken Lauge mit einem pH-Wert von mindestens 12, besonders bevorzugt 13 bis 14, behandelt. Der pH-Wert kann in einer für den Fachmann an sich bekannten Art und Weise bestimmt werden, z. B. mittels pH-Papier. Als Lauge verwendet man bevorzugt eine NaOH- oder KOH-Lauge. Die Konzentration der wässrigen Lauge kann so gewählt werden, dass die wässrige Phase nach der Aufarbeitung einen pH-Wert von 12 erreicht. pH-Werte über 12 sind zu bevorzugen. Das Volumen der wässrigen Phase kann durch die während der Aufarbeitung gebildete Menge an NaCl bestimmt werden, und hängt in der Regel vom freien Chloridgehalt des Rohstoffs ab.

Geeigneterweise lässt man die so erhaltene Mischung unter Rühren bis zu 30 Minuten, vorzugsweise 10 Sekunden bis 10 Minuten, besonders bevorzugt 15 Sekunden bis 5 Minuten, ganz besonders bevorzugt 20 Sekunden bis 3 Minuten, insbesondere 25 Sekunden bis 1 Minute, reagieren.

Bevorzugt führt man die Aufarbeitung bei einer Temperatur im Bereich von 5 bis 100 °C, besonders bevorzugt von 10 bis 60 °C und ganz besonders bevorzugt zwischen 20 und 40 °C durch. Dabei arbeitet man bevorzugt in einem beheiz-/kühlbaren Rührkessel mit konisch zulaufendem Boden einschließlich Bodenablass und Sichtfenster. Kessel und Rührwerk sind vorzugsweise aus einem nicht rostenden Material, beispielsweise Edelstahl oder emailliertem Stahl.

In der Regel bilden sich schon nach kurzer Ruhezeit zwei Phasen aus, die scharf von einander getrennt vorliegen. Nach der Ausbildung der zwei Phasen kann man die wässrige Phase von der organischen Phase über das Bodenventil des Kessels ablassen und so von der organischen Phase trennen.

Die wässrige Phase enthält in der Regel das bei der Umsetzung gebildete Salz in gelöster Form, so enthält die wässrige Phase beispielsweise bei Einsatz von Natronlauge gelöstes NaCl. Geeigneterweise sollte die abgetrennte wässrige Phase darüber hinaus noch einen pH-Wert von mindestens 12 aufweisen.

Die organische Phase kann nun in eine weitere Trenneinheit, beispielsweise in eine Destillation, überführt oder über einen Dünnschichtverdampfer bzw. über einen Kurzwegverdampfer gefahren werden. Dort wird das organische Lösemittel, vorzugsweise Toluol, entfernt, geeigneterweise durch Abtrennen unter vermindertem Druck.

Man kann die nach dem erfindungsgemäßen Verfahren erhältliche organische Phase aber auch einer Feindestillation unterwerfen, um so die jeweiligen Einzelbestandteile der erfindungsgemäß erhaltenen organischen Phase zu gewinnen.

Insbesondere kann man das erfindungsgemäße Verfahren zur Herstellung von 1-Aminomethyltrimethoxysilan, 1-Aminomethyltriethoxysilan, 1-Aminomethyl-methyldimethoxysilan, 1-Aminomethyl-methyldiethoxysilan, 2-Aminoethyltrimethoxy-silan, 2-Aminoethyltriethoxysilan, 3-Aminopropyltrimethoxysilan (AMMO), 3-Aminopropyltriethoxysilan (AMEO), 3-Aminopropylmethyldimethoxysilan, 3-Aminopropylmethyldiethoxysilan, N-Methyl-3-aminopropyltrimethoxysilan, N-Methyl-3-aminopropyltriethoxysilan, N-Butyl-3-aminopropyltrimethoxysilan, 3-Aminopropyldimethylmethoxysilan, 3-Aminopropyldimethylethoxysilan, 3-Aminopropyltrimethylsilan, 3-Amino-2-methylpropyltrimethoxysilan, 3-Amino-2-methylpropyltriethoxysilan, N-[2-Aminoethyl]-3-aminopropyltrimethoxysilan (DAMO), N-[2-Aminoethyl]-3-aminopropyltriethoxysilan, N-[2-Aminoethyl]-3-aminopropyl-methyldimethoxysilan, N-[2-Aminoethyl]-3-amino-propylmethyldiethoxysilan, N,N-Bis[2-Aminoethyl]-3-aminopropyltrimethoxysilan, N,N-Bis[2-Aminoethyl]-3-aminopropyltriethoxysilan, N-[2-Aminoethyl]-N'-[2-Aminoethyl]-3-aminopropyl-trimethoxysilan, N-[2-Aminoethyl]-N'-[2-Aminoethyl]-3-aminopropyltriethoxysilan, um nur einige Beispiele zu nennen, und entsprechenden erfindungsgemäßen bis- und tris-aminofunktionelle Organosilane enthaltenden Zusammensetzungen, d. h. eine Zusammensetzung, die entsprechende bis- und tris-silylierte Amine gemäß den allgemeinen Formeln (II) und (III) enthält, durchführen.

Bei der zuvor beschriebenen, bevorzugten Ausführungsform des erfindungsgemäßen Verfahrens kann man im Allgemeinen ein halogenfunktionelles Organosilan der allgemeinen Formel (II) mit überschüssigem Ammoniak oder einem organischen Amin der allgemeinen Formel (III) unter Druck und Temperaturerhöhung in flüssiger Phase umsetzen. Anschließend kann man überschüssiges Ammoniak oder organisches Amin unter Druck abtrennen, beispielsweise durch Destillation bzw. Abflashen, wobei das dabei entstandene Ammoniumhalogenid oder organisches Aminhydrohalogenid geeigneterweise vollständig in der flüssigen Phase gelöst bleibt. Die so erhaltene Flüssigphase kann nun in einen Kristallisator überführt werden, wobei man im Kristallisator eine organische oder siliciumorganische Flüssigkeit oder ein Gemisch aus besagten Flüssigkeiten, vorzugsweise Toluol oder Hexan, Heptan, Octan, Cyclohexan oder ein Gemisch daraus, vorlegt und den Kristallisator auf einer niedrigeren Druckstufe als die vorhergehende Reaktionsstufe betreibt. In der Regel destilliert dabei die Restmengen an Ammoniak oder organischem Amin, gegebenenfalls zusätzlich durch temperaturgesteuerte Energiezufuhr, ab. Der Kristallisator kann aber auch gekühlt werden. Das hier im Kristallisator entstandene Ammoniumhalogenid oder organisches Aminhydrohalogenid enthaltende Salz kann man nun vom Rohprodukt abtrennen, beispielsweise durch Filtration, und das reine aminofunktionelle Organosilan aus dem Rohprodukt vorteilhaft mittels wässriger Aufarbeitung gewinnen. Zur Gewinnung des Reinprodukts kann man zusätzlich eine gegebenenfalls fraktionierte Destillation durchführen, die man unter Normaldruck oder unter vermindertem Druck betreiben kann. Darüber hinaus kann man den dabei anfallenden Rückstand ebenfalls aufarbeiten und so zur Gewinnung einer bis- und tris-aminofunktionellen Zusammensetzung in einfacher und wirtschaftlicher Weise nutzen, indem man dem besagten Rückstand ein im Wesentlichen unpolares organisches Lösemittel und eine starke, wässrige Lauge zusetzt, mischt und reagieren lässt. Anschließend kann man die wässrige, salzhaltige Phase von der organischen Phase abtrennen und entfernt aus der organischen Phase das Lösemittel, vorzugsweise unter vermindertem Druck. Zur Gewinnung einer bis- und tris-aminofunktionelle Organosilane enthaltenden Zusammensetzung kann man ferner die im Sumpf verbleibende organische Phase filtrieren (vgl. hierzu die deutsche Parallelanmeldung 10 2008 002 183.0 "Verfahren zur Aufbereitung salzhaltiger Rückstände aus der Herstellung von aminofunktionellen Organosilanen")

Ein solches in einfacher und wirtschaftlicher Weise aufgearbeitetes Aminosilan kann vorteilhaft als Haftvermittler, als Bestandteil in Beschichtungssystemen, als Bestandteil in Farben und Lacken, als Bohrhilfsmittel, als Mittel oder als Zusatzstoff bei der Gewinnung und Förderung von Erdöl, wie es beispielsweise aus WO 05/124100, WO 05/124099, US 4,498,538, US 4,580,633 sowie US 2004/0177957 A1 hervorgeht, als Mittel oder in einem Mittel zur Verfestigung oder Vernetzung von insbesondere sandreichen Erdschichten, als Bestandteil in Epoxid- sowie Phenolharzen, als Bestandteil in Kunststoffen, als Bestandteil in organisch modifizierten Gläsern, für die Modifizierung von Glas- und Mineralfaseroberflächen, für die Glasfaserverstärkung von Kunststoffen, als Bestandteil in Schlichten und für die Behandlung von Füllstoffen und Pigmenten sowie als Zusatz in Kleb- und Dichtmassen verwendet werden.

Somit ist ebenfalls Gegenstand der vorliegenden Erfindung die Verwendung eines erfindungsgemäß hergestellten Aminosilans für die zuvor genannten Anwendungen.

Die vorliegende Erfindung wird durch das nachfolgende Beispiel näher erläutert, ohne den Gegenstand zu beschränken.

## Beispiele

### Direkte potentiographische Titration zur Bestimmung von hydrolysierbarem Chlorid mit Silbernitrat

Anwendungsbereich: 6 - 1 000 mg / kg

Chemikalien:

| Wasser | : destilliertes oder deionisiertes Wasser |
|---|---|
| Essigsäure | : z. A., ≥ 99,8 % (Eisessig), Haltbarkeit 5 Jahre |
| Ethanol | : vergällt, Haltbarkeit 10 Jahre |
| Silbernitrat | : 0,1 mol/l, Kalibrierlösung, z. Bsp. gebrauchsfertig von Merck, Haltbarkeit: 2 Jahre, nach Anbruch 2 Monate |
| Silbernitrat | : 0,01 mol/l bzw. 0,005 mol/l, Kalibrierlösung, wird durch Verdünnen der Lösung aus 6.4 hergestellt, Haltbarkeit 2 Monate |
| Natriumchlorid | : 0,01 mol/l, Kalibrierlösung, Haltbarkeit: 6 Monate Herstellung der Kalibrierlösung aus einer Ampulle, z. B. Titrisol7 von Merck mit c(NaCl)=0,1 mol/l |

Geräte und Software:

Bechergläser 150 ml, hohe Form
Messzylinder 10 ml, 25 ml und 100 ml
Titrationsautomat, z. B. Metrohm 682 mit Silberstab- und Ag/AgCl-Referenzelektrode
Magnetrührwerk und teflonummantelte Rührstäbchen

Arbeitsvorschrift:

Die entsprechende Probenmenge wird in ein 150-ml-Becherglas gegeben und mit 20 ml Ethanol und 80 ml Essigsäure versetzt. Anschließend wird potentiografisch mit Silbernitrat-Lösung titriert. Mit den gleichen Reagensmengen wird ein Blindwert ermittelt.

Auswertung:

Der Titroprozessor wird in aller Regel so programmiert, dass nach der Titration direkt der Massenanteil an Chlorid in mg/kg ausgedruckt wird.

Dafür sowie für die manuelle Auswertung gilt folgende Formel:

$$\frac{(V_T - V_{Bl}) \times c_{AgNO3} \times 35,5 \times 1\,000}{E} = \text{mg Cl}^- / \text{kg}$$

$V_T$ = Verbrauch an $AgNO_3$-Lösung in ml
$V_{Bl}$ = Ermittelter Blindverbrauch an $AgNO_3$-Lösung in ml
$c_{AgNO3}$ = Konzentration der $AgNO_3$-Lösung in mol/l
35,5 = Molare Masse von Chlorid in g/mol
1 000 = Umrechnungsfaktor in g/kg
E = Einwaage in g

**Beispiel 1**

Herstellung von 3-(n-Butylamino)propyltrimethoxysilan

328,95 g n-Butylamin wurden in einem 1-I-Büchi-Glasautoklaven vorgelegt. Bei einer Temperatur von 130°C und einem Druck von 3,2 bar wurden 298,5 g CPTMO mittels einer Pumpe dosiert (5 ml/min). Nach Beendigung der Dosierung wurde die Reaktion 2 h bei 155 °C gehalten, anschließend auf 140 °C abgekühlt. Nach dem Entspannen des Reaktors wurde das n-Butylamin bei 145 °C destillativ entfernt. Der Kristallbrei wurde mit 1295 g Toluol versetzt und warm in einen Scheidetrichter überführt. Dann wurde eine kalte wässrige Lösung (113,2 g NaOH und 329 g H2O) zugegeben und 30 s intensiv gemischt. Die anschließende Phasentrennung dauerte 30 s.
Auswaage wässrige Phase: 497 g
Auswaage organ. Phase: 1609 g
Die organische Phase wurde bei 89 bis 95 mbar und 57 bis 65 °C am Rotationsverdampfer vom Toluol befreit. Anschließend wurde das Produkt bei 3 mbar und 126 °C destilliert.

1. Fraktion (Toluol): 1217 g
2. Fraktion (Produkt): 271,9 g, klare farblose Flüssigkeit

Ausbeute: 72 %

**Patentansprüche**

1. Verfahren zur Aufarbeitung eines Ammoniumhalogenide und/oder organische Aminhydrohalogenide enthaltenden aminofunktionellen Organosilans,
wobei man dem Ammoniumhalogenide und/oder organische Aminhydrohalogenide enthaltenden aminofunktionellen Organosilan

- optional mindestens ein unpolares organisches Lösemittel zusetzt,
- eine wässrige Lauge zugibt,
- reagieren lässt,
- anschließend die wässrige von der organischen Phase trennt,
- aus der organischen Phase gegebenenfalls vorliegendes Lösemittel entfernt
und
- die verbliebene organische Phase gewinnt.

2. Verfahren nach Anspruch 1,

**dadurch gekennzeichnet,**
**dass** man zunächst

- ein halogenfunktionelles Organosilan der allgemeinen Formel (IV)

$$X-Z-Si(R'')_n(OR')_{3-n} \qquad (IV),$$

worin X für Cl, Br oder J steht, Z eine bivalente Alkylgruppe aus der Reihe $-CH_2-$, $-(CH_2)_2-$, $-(CH_2)_3-$, $-(CH_2)_4-$ oder $-(CH_2)(CH)CH_3(CH_2)-$ darstellt, Gruppen R' gleich oder verschieden sind und R' für ein Wasserstoff (H) oder eine lineare oder verzweigte Alkyl-Gruppe mit 1 bis 8 C-Atomen oder eine Aryl-Gruppe steht, Gruppen R'' gleich oder verschieden sind und R'' für eine lineare oder verzweigte Alkyl-Gruppe mit 1 bis 8 C-Atomen oder eine Aryl-Gruppe steht und n gleich 0, 1, 2 oder 3 ist,

mit überschüssigem Ammoniak oder einem organischen Amin der allgemeinen Formel (V)

$$RNH[(CH_2)_2NH]_zR \qquad (V),$$

worin Gruppen R gleich oder verschieden sind und R für Wasserstoff (H) oder eine lineare oder verzweigte Alkyl-Gruppe mit 1 bis 4 C-Atomen steht und z gleich 0, 1 oder 2 ist,
umsetzt,

- aus dem so erhaltenen Gemisch an Reaktionsprodukten den überschüssigen Ammoniak bzw. nicht umgesetztes organisches Amin sowie gegebenenfalls angefallenes, festes Salz abtrennt, wobei man optional mindestens ein unpolares organisches Lösemittel zusetzen kann, und anschließend
- so erhaltenes Ammoniumhalogenide und/oder Aminhydrohalogenide enthaltendes Produktgemisch wässrig aufarbeitet, wobei man
- optional mindestens ein unpolares organisches Lösemittel zusetzt,
- ein wässrige Lauge zugibt,
- reagieren lässt,
- die wässrige von der organischen Phase trennt,
- gegebenenfalls aus der organischen Phase Lösemittel entfernt und
- aus der verbliebenen organischen Phase mindestens ein aminofunktionelles Organosilan gemäß Formel (I)

$$R_2N[(CH_2)_2NH]_z(Z)Si(R'')_n(OR')_{3-n} \qquad (I),$$

worin Gruppen R gleich oder verschieden sind und R für Wasserstoff (H) oder eine lineare oder verzweigte Alkyl-Gruppe mit 1 bis 4 C-Atomen steht, Gruppen R' gleich oder verschieden sind und R' für Wasserstoff (H) oder eine lineare oder verzweigte Alkyl-Gruppe mit 1 bis 8 C-Atomen oder eine Aryl-Gruppe steht, Gruppen R'' gleich oder verschieden sind und R'' eine lineare oder verzweigte Alkyl-Gruppe mit 1 bis 8 C-Atomen oder eine Aryl-Gruppe darstellt, Z für eine bivalente Alkylgruppe aus der Reihe $-CH_2-$, $-(CH_2)_2-$, $-(CH_2)_3-$, $-(CH_2)_4-$ oder $-(CH_2)(CH)CH_3(CH_2)-$ steht, n gleich 0, 1, 2 oder 3und z gleich 0, 1 oder 2 sind,

gewinnt.

3. Verfahren nach Anspruch 1 oder 2,
**dadurch gekennzeichnet,**
**dass** man dem Produktgemisch aus der Aminosilansynthese unter Rühren ein unpolares organisches Lösemittel zugibt, weiter eine starke, wässrige Lauge zusetzt, unter guter Durchmischung über 10 Sekunden bis 30 Minuten reagieren und anschließend die Ausbildung von zwei Phasen gewähren lässt.

4. Verfahren nach einem der Ansprüche 1 bis 3,
**dadurch gekennzeichnet,**
**dass** man als unpolares organisches Lösemittel Toluol einsetzt.

5. Verfahren nach einem der Ansprüche 1 bis 4,
**dadurch gekennzeichnet,**
**dass** man als wässrige Lauge eine Natron- oder Kalilauge einsetzt.

**6.** Verfahren nach den Ansprüchen 1 bis 5,
**dadurch gekennzeichnet,**
**dass** man eine wässrige Lauge mit einem pH-Wert von 12 bis 14 einsetzt.

**7.** Verfahren nach den Ansprüchen 1 bis 6,
**dadurch gekennzeichnet,**
**dass** man nach Zugabe der Lauge bei einer Temperatur im Bereich von 5 bis 100 °C reagieren lässt.

**8.** Verfahren nach den Ansprüchen 1 bis 7,
**dadurch gekennzeichnet,**
**dass** man vorliegendes organisches Lösemittel aus der organischen Phase unter Umgebungsdruck oder vermindertem Druck abdestilliert.

**9.** Verfahren nach den Ansprüchen 1 bis 8,
**dadurch gekennzeichnet,**
**dass** man die nach der Phasentrennung verbleibende organische Phase filtriert.

**10.** Verfahren nach einem der Ansprüche 1 bis 9,
**dadurch gekennzeichnet**,
indem man

- A) ein halogenfunktionelles Organosilan der allgemeinen Formel (IV)

$$X\text{-}Z\text{-}Si(R'')_n(OR')_{3-n} \qquad (IV),$$

worin X für Cl, Br oder J steht, Z eine bivalente Alkylgruppe aus der Reihe $-CH_2-$, $-(CH_2)_2-$, $-(CH_2)_3-$, $-(CH_2)_4-$ oder $-(CH_2)(CH)CH_3(CH_2)$-darstellt, Gruppen R' gleich oder verschieden sind und R' für ein Wasserstoff (H) oder eine lineare oder verzweigte Alkyl-Gruppe mit 1 bis 8 C-Atomen oder eine Aryl-Gruppe steht, Gruppen R'' gleich oder verschieden sind und R'' für eine lineare oder verzweigte Alkyl-Gruppe mit 1 bis 8 C-Atomen oder eine Aryl-Gruppe steht, und n gleich 0, 1, 2 oder 3 ist,
mit überschüssigem Ammoniak oder einem organischen Amin der allgemeinen Formel (V)

$$RNH[(CH_2)_2NH]_zR \qquad (V),$$

worin Gruppen R gleich oder verschieden sind und R für Wasserstoff (H) oder eine lineare oder verzweigte Alkyl-Gruppe mit 1 bis 4 C-Atomen steht und z gleich 0, 1 oder 2 ist,
unter Druck und Temperaturerhöhung in flüssiger Phase umsetzt,
- B) anschließend überschüssiges Ammoniak oder organisches Amin abtrennt und dabei Ammoniumhalogenid oder organisches Aminhydrohalogenid vollständig in der flüssigen Phase gelöst bleibt,
- C) die so erhaltene Flüssigphase in einen Kristallisator überführt,
wobei man optional mindestens ein unpolares organisches Lösemittel zusetzt und den Kristallisator auf einer niedrigeren Druckstufe als die vorhergehende Reaktionsstufe oder bei Umgebungsdruck betreibt, Ammoniumhalogenid bzw. organisches Aminhydrohalogenid und Rohprodukt trennt,
- D) dem so erhaltenes Rohprodukt bzw. Produktgemisch, optional mindestens ein unpolares organisches Lösemittel zusetzt, eine wässrige Lauge zugibt, reagieren lässt, anschließend die wässrige von der organischen Phase trennt, aus der organischen Phase Lösemittel entfernt und
- E) die im Sumpf verbleibende organische Phase filtriert und/oder mittels Destillation mindestens ein aminofunktionelles Organosilan gemäß Formel (I) gewinnt.

**Claims**

**1.** Process for working up an amino-functional organosilane containing ammonium halides and/or organic amine hydrohalides by

- optionally adding at least one nonpolar organic solvent to the amino-functional organosilane containing ammonium halides and/or organic amine hydrohalides,
- adding an aqueous alkali,

- allowing them to react,
- then separating the aqueous phase from the organic phase, and
- removing any solvent present from the organic phase
- to obtain the remaining organic phase.

2. Process according to Claim 1,
   **characterized in that**

   - a halogen-functional organosilane of the general formula (IV)

   $$X\text{-}Z\text{-}Si(R'')_n(OR')_{3-n} \qquad (IV)$$

   in which X is Cl, Br or I, Z is a bivalent alkyl group from the group of $-CH_2-$, $-(CH_2)_2-$, $-(CH_2)_3-$, $-(CH_2)_4-$ or $-(CH_2)(CH)CH_3(CH_2)-$, R' groups are the same or different and R' is a hydrogen (H) or a linear or branched alkyl group having 1 to 8 carbon atoms or an aryl group, R'' groups are the same or different and R'' is a linear or branched alkyl group having 1 to 8 carbon atoms or an aryl group, and n is 0, 1, 2 or 3, is first reacted with excess ammonia or an organic amine of the general formula (V)

   $$RNH[(CH_2)_2NH]_zR \qquad (V)$$

   in which R groups are the same or different and R is hydrogen (H) or a linear or branched alkyl group having 1 to 4 carbon atoms, and z is 0, 1 or 2,
   - the excess ammonia or unconverted organic amine and any solid salt obtained are removed from the mixture of reaction products thus obtained, optionally with addition of at least one nonpolar organic solvent, and then

   - thus obtained product mixture containing ammonium halides and/or amine hydrohalides is subjected to aqueous workup, by
   - optionally adding at least one nonpolar organic solvent,
   - adding an aqueous alkali,
   - allowing them to react,
   - separating the aqueous phase from the organic phase, and
   - if appropriate, removing solvent from the organic phase
   - to obtain, from the remaining organic phase, at least one amino-functional organosilane of the formula (I)

   $$R_2N[(CH_2)_2NH]_z(Z)Si(R'')_n(OR')_{3-0} \qquad (I)$$

   in which R groups are the same or different and R is hydrogen (H) or a linear or branched alkyl group having 1 to 4 carbon atoms, R' groups are the same or different and R' is hydrogen (H) or a linear or branched alkyl group having 1 to 8 carbon atoms or an aryl group, R'' groups are the same or different and R'' is a linear or branched alkyl group having 1 to 8 carbon atoms or an aryl group, Z is a bivalent alkyl group from the group of $-CH_2-$, $-(CH_2)_2-$, $-(CH_2)_3-$, $-(CH_2)_4-$ or $-(CH_2)(CH)CH_3(CH_2)-$, n is 0, 1, 2 or 3 and z is 0, 1 or 2.

3. Process according to either of Claims 1 and 2,
   **characterized in that**,
   a nonpolar organic solvent is added to the product mixture from the aminosilane synthesis while stirring, a strong aqueous alkali is additionally added, and the mixture is allowed to react with good mixing for 10 seconds to 30 minutes to subsequently form two phases.

4. Process according to any one of Claims 1 to 3,
   **characterized in that**,
   the nonpolar organic solvent used is toluene.

5. Process according to any one of Claims 1 to 4,
   **characterized in that**,
   the aqueous alkali used is a sodium hydroxide solution or potassium hydroxide solution.

6. Process according to any of Claims 1 to 5,

**characterized in that**,
an aqueous alkali with a pH of 12 to 14 is used.

7.  Process according to any of Claims 1 to 6,
    **characterized in that**,
    after addition of the alkali, the mixture is allowed to react at a temperature in the range from 5 to 100°C.

8.  Process according to any of Claims 1 to 7,
    **characterized in that**,
    organic solvent present is distilled out of the organic phase under atmospheric pressure or reduced pressure.

9.  Process according to any of Claims 1 to 8,
    **characterized in that**,
    the organic phase remaining after the phase separation is filtered.

10. Process according to any of Claims 1 to 9, **characterized in that**,

    - A) a halogen-functional organosilane of the general formula (IV)

    $$X\text{-}Z\text{-}Si(R'')_n(OR'')_{3-n} \qquad (IV)$$

    in which X is Cl, Br or I, Z is a bivalent alkyl group from the group of $-CH_2-$, $-(CH_2)_2-$, $-(CH_2)_3-$, $-(CH_2)_4-$ or $-(CH_2)(CH)CH_3(CH_2)-$, R' groups are the same or different and R' is a hydrogen (H) or a linear or branched alkyl group having 1 to 8 carbon atoms or an aryl group, R'' groups are the same or different and R'' is a linear or branched alkyl group having 1 to 8 carbon atoms or an aryl group, and n is 0, 1, 2 or 3,
    is reacted with excess ammonia or an organic amine of the general formula (V)

    $$RNH[(CH_2)_2NH]_zR \qquad (V)$$

    in which R groups are the same or different and R is hydrogen (H) or a linear or branched alkyl group having 1 to 4 carbon atoms, and z is 0, 1 or 2,
    under pressure and with a temperature increase in the liquid phase,
    - B) then excess ammonia or organic amine is removed to leave ammonium halide or organic amine hydrohalide dissolved fully in the liquid phase,
    - C) the liquid phase thus obtained is transferred to a crystallizer,
    optionally with addition of at least one nonpolar organic solvent and the crystallizer being operated at a lower pressure level than the preceding reaction stage or at atmospheric pressure, and ammonium halide or organic amine hydrohalide and crude product are separated,
    - D) optionally at least one nonpolar organic solvent is added to the crude product or product mixture thus obtained, an aqueous alkali is added, they are allowed to react, then the aqueous phase is separated from the organic phase, solvent is removed from the organic phase, and
    - E) the organic phase remaining in the bottoms is filtered and/or distilled to obtain at least one aminofunctional organosilane according to formula (I).

**Revendications**

1.  Procédé de traitement d'un organosilane aminofonctionnel contenant des halogénures d'ammonium et/ou des aminohydrohalogénures organiques, dans lequel

    - au moins un solvant organique apolaire est éventuellement ajouté à l'organosilane aminofonctionnel contenant des halogénures d'ammonium et/ou des aminohydrohalogénures organiques,
    - une lessive aqueuse est ajoutée,
    - le mélange est laissé réagir,
    - puis la phase aqueuse est séparée de la phase organique,
    - le solvant éventuellement présent est éliminé de la phase organique et
    - la phase organique restante est obtenue.

**2.** Procédé selon la revendication 1, **caractérisé en ce que** tout d'abord

- un organosilane halogénofonctionnel de formule générale (IV)

$$X\text{-}Z\text{-}Si(R'')_n(OR')_{3-n} \qquad (IV)$$

dans laquelle X représente Cl, Br ou J, Z représente un groupe alkyle bivalent de la série -CH$_2$-, -(CH$_2$)$_2$-, -(CH$_2$)$_3$-, - (CH$_2$)$_4$- ou - (CH$_2$) (CH) CH$_3$ (CH$_2$) -, les groupes R' sont identiques ou différents, et R' représente un hydrogène (H) ou un groupe alkyle linéaire ou ramifié de 1 à 8 atomes C ou un groupe aryle, les groupes R'' sont identiques ou différents, et R'' représente un groupe alkyle linéaire ou ramifié de 1 à 8 atomes C ou un groupe aryle, et n représente 0, 1, 2 ou 3,
est mis en réaction avec de l'ammoniac en excès ou une amine organique de formule générale (V)

$$RNH\,[(CH_2)_2NH]_zR \qquad (V)$$

dans laquelle les groupes R sont identiques ou différents, et R représente hydrogène (H) ou un groupe alkyle linaire ou ramifié de 1 à 4 atomes C, et z représente 0, 1 ou 2,
- l'ammoniac en excès ou l'amine organique non réagie, ainsi qu'un sel solide éventuellement formé, sont séparés du mélange de produits de réaction ainsi obtenu, au moins un solvant organique apolaire pouvant éventuellement être ajouté, puis
- le mélange de produits contenant des halogénures d'ammonium et/ou des aminohydrohalogénures ainsi obtenu est traité par voie aqueuse,
- au moins un solvant organique apolaire étant éventuellement ajouté,
- une lessive aqueuse étant ajoutée,
- le mélange étant laissé réagir,
- la phase aqueuse étant séparée de la phase organique,
- le solvant étant éventuellement éliminé de la phase organique et
- au moins un organosilane aminofonctionnel de formule (I)

$$R_2N\,[(CH_2)_2NH]_z(Z)\,Si\,(R'')_n(OR')_{3-n} \qquad (I)$$

dans laquelle les groupes R sont identiques ou différents, et R représente hydrogène (H) ou un groupe alkyle linéaire ou ramifié de 1 à 4 atomes C, les groupes R' sont identiques ou différents, et R' représente hydrogène (H) ou un groupe alkyle linéaire ou ramifié de 1 à 8 atomes C ou un groupe aryle, les groupes R'' sont identiques ou différents, et R'' représente un groupe alkyle linéaire ou ramifié de 1 à 8 atomes C ou un groupe aryle, Z représente un groupe alkyle bivalent de la série -CH$_2$-, -(CH$_2$)$_2$-, -(CH$_2$)$_3$-, - (CH$_2$)$_4$- ou - (CH$_2$) (CH) CH$_3$ (CH$_2$) -, n représente 0, 1, 2 ou 3, et z représente 0, 1 ou 2,
étant obtenu à partir de la phase organique restante.

**3.** Procédé selon la revendication 1 ou 2, **caractérisé en ce qu'**un solvant organique apolaire est ajouté sous agitation au mélange de produits issu de la synthèse de l'aminosilane, puis une lessive aqueuse forte est ajoutée, le mélange est laissé réagir sous mélange fort pendant 10 secondes à 30 minutes, puis deux phases sont laissées se former.

**4.** Procédé selon l'une quelconque des revendications 1 à 3, **caractérisé en ce que** du toluène est utilisé en tant que solvant organique apolaire.

**5.** Procédé selon l'une quelconque des revendications 1 à 4, **caractérisé en ce qu'**une lessive de soude ou de potasse est utilisée en tant que lessive aqueuse.

**6.** Procédé selon les revendications 1 à 5, **caractérisé en ce qu'**une lessive aqueuse d'un pH de 12 à 14 est utilisée.

**7.** Procédé selon les revendications 1 à 6, **caractérisé en ce que** le mélange est laissé réagir après l'ajout de la lessive à une température dans la plage allant de 5 à 100 °C.

**8.** Procédé selon les revendications 1 à 7, **caractérisé en ce que** le solvant organique présent est éliminé par distillation de la phase organique à la pression ambiante ou sous pression réduite.

**9.** Procédé selon les revendications 1 à 8, **caractérisé en ce que** la phase organique restante après la séparation des phases est filtrée.

10. Procédé selon l'une quelconque des revendications 1 à 9, **caractérisé en ce que**

- A) un organosilane halogénofonctionnel de formule générale (IV)

$$X-Z-Si(R'')_n(OR')_{3-n} \qquad (IV)$$

dans laquelle X représente Cl, Br ou J, Z représente un groupe alkyle bivalent de la série $-CH_2-$, $-(CH_2)_2-$, $-(CH_2)_3-$, $-(CH_2)_4-$ ou $-(CH_2)(CH)CH_3(CH_2)-$, les groupes R' sont identiques ou différents, et R' représente un hydrogène (H) ou un groupe alkyle linéaire ou ramifié de 1 à 8 atomes C ou un groupe aryle, les groupes R'' sont identiques ou différents, et R'' représente un groupe alkyle linéaire ou ramifié de 1 à 8 atomes C ou un groupe aryle, et n représente 0, 1, 2 ou 3,
est mis en réaction avec de l'ammoniac en excès ou une amine organique de formule générale (V)

$$RNH[(CH_2)_2NH]_zR \qquad (V)$$

dans laquelle les groupes R sont identiques ou différents, et R représente hydrogène (H) ou un groupe alkyle linaire ou ramifié de 1 à 4 atomes C, et z représente 0, 1 ou 2,
en phase liquide, avec élévation de la pression et de la température, puis
- B) l'ammoniac en excès ou l'amine organique est séparé, et l'halogénure d'ammonium ou l'aminohydrohalogénure organique reste entièrement dissous dans la phase liquide,
- C) la phase liquide ainsi obtenue est transférée dans un cristallisateur,
au moins un solvant organique apolaire étant éventuellement ajouté et le cristallisateur étant exploité à un niveau de pression inférieur à l'étape de réaction précédente ou à la pression ambiante, l'halogénure d'ammonium ou l'aminohydrohalogénure organique et le produit brut étant séparés,
- D) au moins un solvant organique apolaire est éventuellement ajouté au produit brut ou mélange de produits ainsi obtenu, une lessive aqueuse est ajoutée, le mélange est laissé réagir, puis la phase aqueuse est séparée de la phase organique, le solvant est éliminé de la phase organique et
- E) la phase organique restant au fond est filtrée et/ou au moins un organosilane aminofonctionnel de formule (I) est obtenu par distillation.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE PS1023462 C
- DE PS2749316 C
- DE PS2753124 C
- EP 0702017 A2
- EP 0741137 A2
- EP 0849271 A2
- EP 1295889 A2
- EP 1262484 A2
- EP 1209162 A2
- DE 10140563 A1
- EP 0702017 A
- WO 05124100 A
- WO 05124099 A
- US 4498538 A
- US 4580633 A
- US 20040177957 A1